# EUROPÄISCHE PATENTSCHRIFT

(11) **EP 0 773 467 B1**
(45) Veröffentlichungstag und Bekanntmachung des Hinweises auf die Patenterteilung: **05.11.2003**
(21) Anmeldenummer: 96117483.6
(22) Anmeldetag: 31.10.1996
(51) Int. Cl.: G02F 1/1347, G02F 1/141, G09G 3/36

(54) **Ferroelektrische Flüssigkristallanzeige**
Ferroelectric liquid crystal display
Dispositif d'affichage à cristal liquide ferroélectrique

(30) Priorität: 07.11.1995 CH 314395
(43) Veröffentlichungstag der Anmeldung: 14.05.1997
(73) Patentinhaber: Rolic AG, 6301 Zug (CH)
(72) Erfinder: Fünfschilling, Jürg, 4054 Basel (CH); Schadt, Martin, 4411 Seltisberg (CH)
(74) Vertreter: Liebetanz, Michael

(56) Entgegenhaltungen:
- EP-A- 0 309 774
- WO-A-95/10794
- FR-A- 2 644 596

## Beschreibung

Die Erfindung betrifft ferroelektrische Flüssigkristallanzeigen.

Ferroelektrische Flüssigkristallanzeigen, insbesondere solche des DHF - Typs (Deformed Helix Ferroelectric) sind eine attraktive Alternative zu den konventionellen TN - (Twisted Nematic) oder STN - (Super-Twisted Nematic) Anzeigen, vor allem wenn grosser Blickwinkel, Grautöne oder kurze Schaltzeiten, z.B. beim Betrieb bei tiefen Temperaturen, gefordert werden.

Die Wirkungsweise ferroelektrischer Flüssigkristallanzeigen ist z.B. in EP - A - 309 774 beschrieben. Wenn sie im sog. symmetrischen Modus betrieben werden, haben sie den Nachteil eines grossen Schaltwinkels von ±45°, der für maximale Transmission nötig ist. Mischungen mit grossem Schaltwinkel sind schwierig herzustellen und generell langsamer als Mischungen mit kleinerem Schaltwinkel. Zusätzlich neigen sie zum Aufwinden der Helix, bevor der maximale Schaltwinkel erreicht wird. Bisher existieren noch keine LC-Materialien mit optimalem Schaltwinkel, d.h. optimaler Helligkeit im symmetrischen Modus. Werden sie hingegen im sog. asymmetrischen Modus betrieben, besteht ein Nachteil darin, dass die abwechselnde Polarität der einzelnen Bilder nicht angewendet werden kann. Soll die Anzeige z.B. längere Zeit dunkel bleiben, so muss während dieser ganzen Zeit eine negative Spannung anliegen. Dies führt zu Raumladungen im Flüssigkristall und an den Grenzflächen. Diese Raumladungen ändern die elektrooptische Kennlinie, was zu Geisterbildern und ähnlichen, sehr störenden Effekten führen kann, welche die Anwendbarkeit einer Anzeige in Frage stellen.

Der vorliegenden Erfindung liegt die Aufgabe zugrunde, eine ferroelektrische Flüssigkristallanzeige ohne die Nachteile der bisher bekannten Anzeigen dieser Art anzugeben.

Erfindungsgemäss wird dies erreicht durch zwei hintereinander zwischen zwei Polarisatoren angeordneten Flüssigkristallzellen, von denen die eine mit Zeilenelektroden, die andere mit Pixelelektroden versehen ist, und durch Ansteuerungsmittel zur Ansteuerung der Pixelelektroden mit Bildinformation synchron mit den Zeilenelektroden, wobei Orientierung und Brechungsindex der Flüssigkristallzellen so gewählt werden, dass die Transmission bei Umpolung der Steuerspannungen nicht wesentlich ändert und wobei beide Anzeigen so angesteuert werden, dass der Schaltwinkel jeweils ±22.5° nicht überschreitet und die Polarität der Spannungen periodisch so invertiert wird, dass im Mittel keine Gleichspannung über den Zellen liegt.

Im folgenden werden anhand der beiliegenden Zeichnungen bevorzugte Ausführungsbeispiele der Erfindung beschrieben. Es zeigen
Fig. 1 eine schematische Schnittdarstellung einer herkömmlichen DHF - Zelle,
Fig. 2 eine schematische perspektivische Darstellung einer DHF - Zelle nach der Erfindung,
Fig. 3 die Orientierungs- und Doppelbrechungseigenschaf-ten der in Fig. 2 gezeigten Zellenanordnung
Fig. 4 die Orientierungs- und Doppelbrechungseigenschaf-ten einer alternativen Anordnung

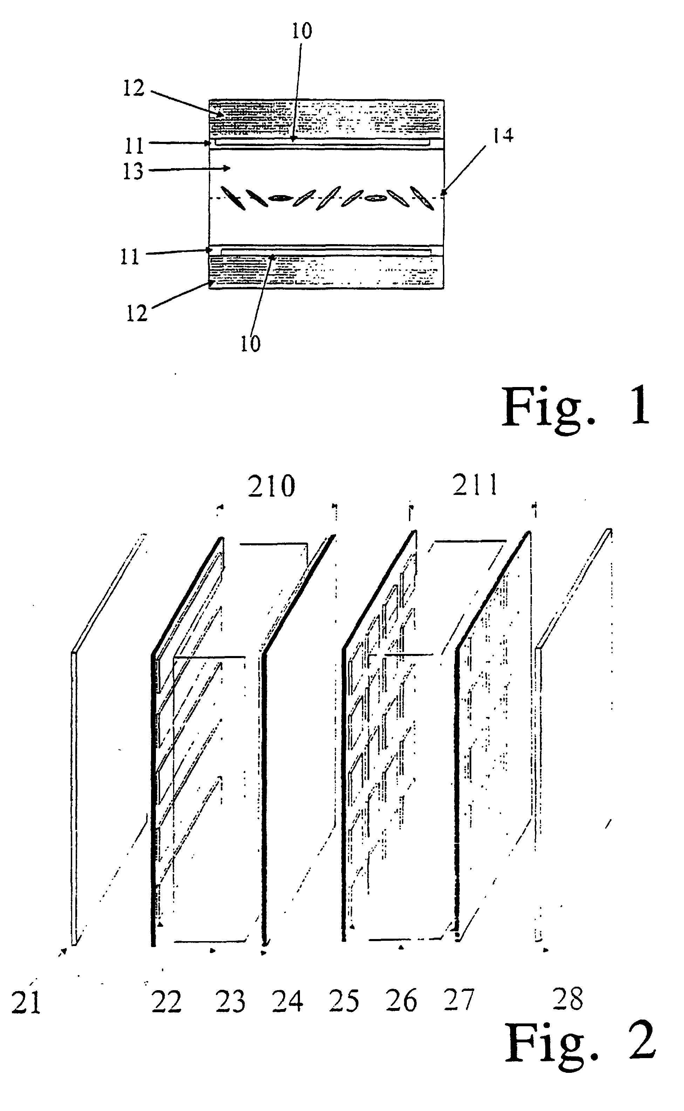

Wie in Fig. 1 gezeigt, besteht eine herkömmliche DHF-Zelle aus zwei mit durchsichtigen Elektroden 10 und Orientierungsschichten 11 versehenen Glasplatten 12 mit einem Abstand von etwa 2 µm. Dazwischen liegt eine Flüssigkristallschicht 13. Der Flüssigkristall hat eine ferroelektrische sog. Sc*-Phase mit einer helikalen Struktur. Die Achse 14 der Helix ist parallel zu den Platten und die Ganghöhe kürzer als die Wellenlänge des sichtbaren Lichtes. Ohne angelegte Spannung ist die Helix undeformiert und der mittlere Brechungsindex zeigt in Richtung der Helixachse. Legt man zwischen den beiden Elektroden eine Spannung an, so dreht dieser mittlere Brechungsindex (d.h. die lange Hauptachse des

FR-A-2 644 596 beschreibt zwei hintereinander, zwischen zwei Polarisatoren angeordnete Flüssigkristallzellen, wobei zur Ansteuerung der Elektroden die Polarität der Spannungen periodisch so invertiert wird, dass im Mittel keine Gleichspannung über den Zellen liegt. Dabei sind die Orientierung und der Brechungsindex der Flüssigkristallzellen so gewählt worden, dass die Transmission bei Umpolung der Steuerspannungen sich nicht wesentlich ändert. FR-A-2 644 596 enthält keine Angaben bezüglich der Verwendung in einer Flüssigkristallanzeige, wobei Zeilenelektroden und Pixelektroden der beiden Flüssigkristallzellen so angesteuert werden, dass der Schaltwinkel ± 22.5° nicht überschreitet. In FR-A-2 644 596 ist die Verwendung als Verschluss ("obturateur") angegeben. Brechungsindexellipsoides) in der Ebene der Glasplatten, und zwar in die eine Richtung für positive und in die entgegengesetzte Richtung für negative Spannung. Erhöht man die Spannung immer mehr, so sättigt dieser Winkel bei einem maximalen Schaltwinkel qₘₐₓ , der charakteristisch ist für den ferroelektrischen Flüssigkristall. Bei Sättigung ist die Helix aufgewunden. Erniedrigt man die Spannung, so bildet sich die Helix wieder. Allerdings kann dies einige Zeit dauern, so dass bei DHF-Zellen ein Aufwinden der Helix i.a. vermieden wird. Dies bedeutet aber, dass der maximal nutzbare Drehwinkel kleiner als qₘₐₓ gewählt werden sollte.

Bringt man eine DHF-Zelle zwischen gekreuzte Polarisatoren, so ändert die Lichttransmission infolge der Drehung des Brechungsindexes. Es lässt sich zeigen, dass für ein Schalten von maximal hell zu dunkel eine Drehung von 45° nötig ist. Im Dunkelzustand ist dabei die optische Achse parallel zu einem der Polarisatoren, im Hellzustand 45° dazu gedreht. Eine DHF-Anzeige lässt sich, wie bereits erwähnt, in zwei verschiedenen Betriebsarten einsetzen, die sich im Winkel q(0) der optischen Hauptachse zu einem der Polarisatoren bei 0V angelegter Spannung unterscheiden:

Beim symmetrischen Modus entspricht eine angelegte Spannung von U = 0 V dem Winkel q=0, d.h. dunkel. Sowohl für positive wie für negative Spannungen U nimmt die Transmission zu und erreicht ein Maximum, wenn q=±45°. Man erhält also dieselbe Transmission für positive wie für gleich grosse, aber negative Spannung. Dies erlaubt es, dasselbe Bild abwechslungsweise mit positiver Spannung und mit negativer Spannung zu schreiben, so dass im Mittel keine Gleichspannungskomponente an der Zelle anliegt und damit auch keine Geisterbilder auftreten.

Beim asymmetrischen Modus entspricht U = 0 V einem Drehwinkel von 22.5°, also einer Transmission von 50%. Eine Spannung der einen (z.B. positiven) Polarität erhöht q und damit die Transmission, die entgegengesetzte Polarität erniedrigt beide Grössen. Für vollständiges hell-dunkel-Schalten muss der Aussteuerbereich für q nur ±22.5° betragen.

Die vorliegende Erfindung vereinigt die Vorteile der beiden Betriebsmodi ohne ihre eingangs erwähnten Nachteile aufzuweisen. Wichtigster Vorteil der Erfindung ist, dass die ferroelektrische Flüssigkristallanzeige im sog. asymmetrischen Modus angesteuert werden können, ohne dass Geisterbilder auftreten und - im Falle der DHF-Zelle - ohne dass die bisher nicht realisierbaren grossen Schaltwinkel auftreten.

In der in Fig. 2 gezeigten Ausführungsform der Erfindung befinden sich zwei unmittelbar hintereinander angeordnete DHF-Flüssigkristallzellen 210, 211 zwischen gekreuzten Polarisatoren 21, 28. Die Flüssigkristallzelle 210 besteht in an sich bekannter Weise aus einer Flüssigkristallschicht 23 zwischen zwei Substraten, von denen eines mit Linienelektroden 22 und das andere mit Flächenelektroden 24 versehen ist. Diese Flüssigkristallzelle wird zeilenweise mit konstanter Amplitude geschaltet. Die Flüssigkristallzelle 211 besteht aus einer Flüssigkristallschicht 26 zwischen zwei Substraten, die mit Pixelelektroden 25, 27 versehen sind und synchron zu Flüssigkristallzelle 210 mit der Bildinformation angesteuert werden. Orientierungsschichten, elektrische Anschlüsse der LCDs, sowie eventuelle Aktivmatrix Bauteile der Flüssigkristallzelle 211 sind in Fig. 2 nicht eingezeichnet.

Erfindungsgemäss sind die Flüssigkristallzelle 210 und 211 so konstruiert und angesteuert, dass störende Gleichspannungskomponenten vermieden werden. Dies wird erreicht, indem man von Bild zu Bild die Polarität der angelegten Spannungen wechselt. Ein wichtiges Charakteristikum der Erfindung ist dabei, dass die Lichttransmission (der Grauwert) in diesen beiden Phasen gleich ist.

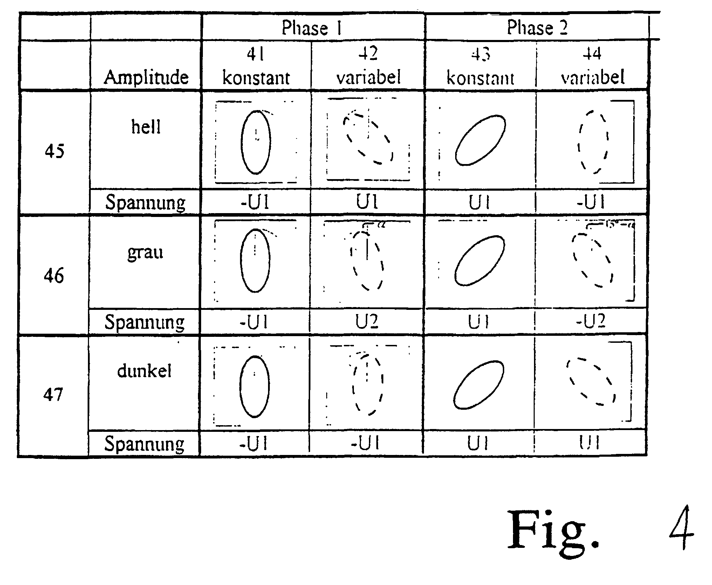

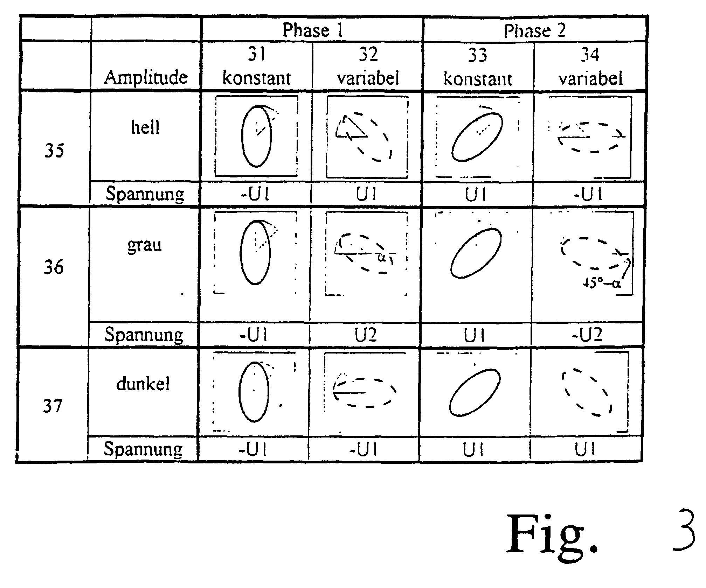

Fig. 3 zeigt schematisch die Orientierungen und Doppelbrechungseigenschaften der beiden Flüssigkristallzellen 210, 211 für drei Graustufen: auf Zeile 35 hell, auf Zeile 36 grau und auf Zeile 37 dunkel, und zwar für die Phase 1 in den Spalten 31 und 32 und für die entgegengesetzt angesteuerte Phase 2 in den Spalten 33 und 34. Der Polarisator 21 (Fig. 2) ist dabei senkrecht, d.h. parallel zur Hauptachse in Spalte 31 polarisiert, der Analysator 24 dazu gekreuzt.

Die Doppelbrechung beider Flüssigkristallzellen ist identisch und entspricht etwa der halben Wellenlänge, d.h. Δn·d = λ/2mit Δn = nₐ-nₒ, na,o = ausserordentlicher und ordentlicher Brechungsindex der DHF-Struktur, d = Zelldicke und λ = Wellenlänge (≈550 nm). Die schattierten Sektoren in Fig. 3 zeigen den elektrooptisch genutzten Drehbereich der optischen Hauptachse, wobei negative Spannungen (z.B. Spalte 31) die Hauptachse nach links, positive Spannungen (z.B. Spalte 33) nach rechts drehen. Für 0 V angelegte Spannung ist bei der ersten Flüssigkristallzelle 210 (Spalten 31 und 33) die optische Hauptachse um 22.5° im Uhrzeigersinn gegen die Vertikale verdreht, bei der zweiten Flüssigkristallzelle 211 (Spalten 32 und 34) 67.5° im Gegenuhrzeigersinn. Insgesamt sind die beiden Zellen, d.h. z.B. die beiden Reibrichtungen der Orientierungsschichten, um 90° gegeneinander verdreht.

Mit Hilfe von Fig. 3 lässt sich direkt einsehen, dass die Transmission in beiden Phasen identisch ist. In Zeile 35, Phase 1, wird das linear polarisierte Licht durch die erste Flüssigkristallzelle 210 (Spalte 31) nicht beeinflusst, da es parallel zur optischen Achse polarisiert ist. Die zweite Flüssigkristallzelle 211 (Spalte 32) wirkt als λ/2-Platte, d.h. es dreht die Polarisationsrichtung um 90°, so dass das Licht den Analysator 24 ungedämpft passieren kann. In Phase 2 wirkt die erste Flüssigkristallzelle 210 (Spalte 33) als λ/2-Platte, und die zweite Flüssigkristallzelle 211 (Spalte 34) beeinflusst die Polarisation nicht mehr. In beiden Phasen wird also das Licht ungeschwächt durchgelassen. Im anderen Extremfall minimaler Transmission (Zeile 37) kompensieren sich sowohl in Phase 1 (Spalten 31 und 32) wie auch in Phase 2 (Spalten 33 und 34) die Doppelbrechungen der beiden Flüssigkristallzellen, die Transmission zwischen gekreuzten Polarisatoren ist also minimal.

Im allgemeinen Fall, grau (Zeile 36), liegt an der zweiten Flüssigkristallzelle 211 eine Spannung U2 mit |U2|≤|U1| an. In Phase 1 kommt das Licht senkrecht polarisiert auf die zweite Flüssigkristallzelle 211, die erste Flüssigkristallzelle 210 ändert wie oben die Polarisation nicht. Die optische Achse der zweiten Flüssigkristallzelle 211 ist um einen von der Spannung U2 gesteuerten Winkel α<45° gegen den Analysator verdreht. Dies führt zu einer Transmission ∝ sin²(2α). In Phase 2 dreht die erste Flüssigkristallzelle 210 die Polarisation um 90° (Spalte 33), sie ist also horizontal beim Einfall auf die zweite Flüssigkristallzelle 211. Da dort in Phase 2 die Spannung -U2 anliegt (Spalte 34), ist die optische Achse um 45° - α gegen den Analysator gedreht, die Transmission wird damit ∝ cos²[2 (45°-α))]. "cos" weil das einfallende Licht parallel zum Analysator polarisiert ist. Dies ist aber ∝ sin²(2α), d.h. identisch zu Phase 1.

Da α , abhängig von der Signalspannung U2, alle Werte zwischen Null und 45° annehmen kann, nimmt die Transmission sin²(2α) alle Werte zwischen 0 und 1 an.

Die genaue Positionierung der gekreuzten Polarisatoren bez. der beiden Flüssigkristallzellen ist nicht kritisch. Aus Fig. 3 folgt, dass die Transmission für den Dunkelzustand (Zeile 37) für jede Richtung der unter sich gekreuzten Polarisatoren minimal ist, da sich die Doppelbrechungen exakt aufheben. Im Hellzustand (Zeile 35) kann der Farbton leicht von der Polarisatorstellung abhängen. Die genaue Positionierung kann damit zur Optimierung der Farbe verwendet werden.

Fig. 4 zeigt eine weitere mögliche gegenseitige Anordnung der beiden Zellen und Polarisatoren. Im Unterschied zu Fig. 3 sind die Zellen nur 45° gegeneinander verdreht. Dies hat zur Folge, dass sich in Phase 1 im Dunkelzustand (Zeile 47, Spalten 41 und 42) die Phasenverschiebungen addieren statt kompensieren wie in Fig. 3. Wenn die Polarisatoren aber parallel und senkrecht zur resultierenden Hauptachse orientiert sind, ist die Transmission dennoch minimal.

Dem Fachmann ist es klar, dass noch weitere Konfigurationen mit analogem Effekt möglich sind, insbesondere wenn auch dickere doppelbrechende Zellen mit Δn·d = λ oder Δn·d = 3λ/2 verwendet werden.

Die Anwendung der vorliegenden Erfindung ist nicht auf DHF-Zellen beschränkt, obwohl dort ihre Vorzüge besonders zur Geltung kommen. Das periodische Umschalten der Polarisation hat auch bei SSF-Flüssigkristallanzeigen seinen Sinn, da auch bei diesen Anzeigen damit Geisterbilder verhindert und Schaltzeiten verkürzt werden.

## Patentansprüche

1. Ferroelektrische Flüssigkristallanzeige mit zwei hintereinander zwischen zwei Polarisatoren (21,28) angeordneten Flüssigkristallzellen (210, 211), von denen die eine mit Zeilenelektroden (22), die andere mit Pixelelektroden (25, 27) versehen ist, und mit Ansteuerungsmittel zur Ansteuerung der Pixelelektroden mit Bildinformation synchron mit den Zeilenelektroden, wobei Orientierung und Brechungsindex der Flüssigkristallzellen so gewählt werden, dass die Transmission bei Umpolung der Steuerspannungen nicht wesentlich ändert und wobei beide Flüssigkristallzellen so angesteuert werden, dass der Schaltwinkel jeweils ±22.5° nicht überschreitet und die Polarität der Spannungen periodisch so invertiert wird, dass im Mittel keine Gleichspannung über den Zellen liegt.

2. Flüssigkristallanzeige gemäss Anspruch 1, wobei die beiden Flüssigkristallzellen DHF-Zellen sind.

## Claims

1. A ferroelectric liquid crystal display comprising two liquid crystal cells (210, 211) disposed one behind the other between two polarizers (21, 28), one cell having line electrodes (22) and the other having pixel electrodes (25, 27) and means for actuating the pixel electrodes with image information in synchronism with the line electrodes, the orientation and refractive index of the liquid crystal cells being so chosen that transmission is not substantially altered when the control voltages are reversed, and the two liquid crystal cells being so actuated that the switching angle does not exceed ±22.5° and the polarity of the voltages is periodically so inverted that on average there is no DC voltage across the cells.

2. A liquid crystal display according to claim 1, wherein the two crystal cells are DHF cells.

## Revendications

1. Dispositif d'affichage à cristaux liquides ferroélectrique, comprenant deux cellules à cristaux liquides (210,211) disposées l'une derrière l'autre entre deux polariseurs (21,28), l'une étant pourvue d'électrodes de lignes (22), l'autre d'électrodes de pixels (25,27), et comprenant des moyens d'asservissement pour asservir les électrodes de pixels à l'aide d'informations d'image de manière synchronisée avec les électrodes de lignes, l'orientation et l'indice de réfraction des cellules à cristaux liquides étant choisis de telle manière que la transmission ne change pas fondamentalement lors d'une inversion de polarité des tensions de commande, et les deux cellules à cristaux liquides étant asservies de telle manière que l'angle de commutation respectif ne dépasse pas ±22.5° et que la polarité des tensions est périodiquement inversée de telle sorte qu'en moyenne aucune tension continue n'est appliquée sur les cellules.

2. Dispositif d'affichage à cristaux liquides selon la revendication 1, les deux cellules à cristaux liquides étant des cellules DHF.
